(19) Europäisches Patentamt
European Patent Office
Office européen des brevets

(11) **EP 2 163 851 B1**

## (12) FASCICULE DE BREVET EUROPEEN

(45) Date de publication et mention
de la délivrance du brevet:
**10.02.2016   Bulletin 2016/06**

(51) Int Cl.:
***G01D 5/12*** *(2006.01)*

(21) Numéro de dépôt: **09290612.2**

(22) Date de dépôt: **04.08.2009**

(54) **Système et procédé de mesure du mouvement axial d'une pièce mobile en rotation**

Messsystem und Verfahren zur Messung der axialen Bewegung eines beweglichen Teils, das sich dreht

System and method for measuring the axial movement of a rotating mobile element

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**

(30) Priorité: **28.08.2008   FR 0804745**

(43) Date de publication de la demande:
**17.03.2010   Bulletin 2010/11**

(73) Titulaire: **SNR Roulements**
**74000 Annecy (FR)**

(72) Inventeurs:
• **Desbiolles, Pascal**
**74570 Thorens Glières (FR)**

• **Vandamme, Etienne**
**74650 Chavanod (FR)**

(74) Mandataire: **Novagraaf Technologies**
**Bâtiment O2**
**2, rue Sarah Bernhardt**
**CS90017**
**92665 Asnières-sur-Seine Cedex (FR)**

(56) Documents cités:
**EP-A- 1 037 015      EP-A- 1 876 422**
**DE-A1- 19 609 793      JP-A- 2006 317 420**

**Description**

**DOMAINE TECHNIQUE DE L'INVENTION**

L'invention concerne un système de mesure du mouvement d'une pièce mobile en rotation et un procédé de mesure du mouvement axial d'une pièce mobile en rotation.

L'invention concerne plus particulièrement la mesure du déplacement axial d'une pièce mobile en rotation autour d'un axe et en translation selon un axe parallèle à l'axe de rotation.

**ÉTAT DE LA TECHNIQUE**

Pour fonctionner correctement, une liaison pivot nécessite un jeu axial de fonctionnement. Toutefois, le jeu varie généralement en fonction de l'état des pièces de guidage et des paliers. Il est donc capital de mesurer le jeu axial qui est un bon indicateur de l'état d'usure du palier. Dans les boîtes d'essieu ferroviaire par exemple, les roulements sont victimes de fretting corrosion qui, au fur et à mesure de l'usure des bagues, induit un jeu axial qui peut dépasser le mm.

Dans l'art antérieur, il est connu des systèmes magnétiques de mesure du mouvement d'un organe tournant utilisant un codeur et un détecteur. Le codeur est généralement un anneau, solidaire de l'organe tournant, comportant une piste annulaire magnétique sur laquelle une pluralité de paires pôles Nord et Sud, equirépartis, sont magnétisées. Le capteur fixe est disposé radialement, en regard de la piste magnétique et composé d'éléments sensibles au champ magnétique. Le capteur délivre des signaux magnétiques dont la fréquence permet notamment de déterminer la vitesse de rotation de l'organe tournant. Toutefois, ces systèmes ne permettent pas de mesurer le déplacement axial de la pièce mobile en rotation.

Il est également connu de disposer le capteur face à l'anneau et de mesurer la variation d'intensité magnétique afin de déterminer le déplacement axial de l'organe tournant. Toutefois, ces mesures ne sont pas fiables car la mesure de l'intensité d'un champ magnétique présente une dérive en température importante. Par conséquent, ce système n'est pas applicable dans un environnement sévère présentant des fortes variations de température.

Pour déterminer le déplacement axial d'un arbre dans un alésage, il existe également des solutions « bout d'arbre », où un capteur de position ou de proximité est monté en face de l'extrémité l'arbre. Toutefois, outre le fait que ce ne soit pas possible, dans certains cas, pour des raisons d'encombrement, le bout d'arbre a parfois une fonction : retour de courant, pignon conique, qui exclue cette solution.

Par ailleurs, la demande de brevet EP 1 876 422 divulgue un système de détection d'un déplacement axial. Ce système utilise un anneau magnétique multipolaire solidaire de l'organe tournant et un capteur fixe disposé radialement, en regard et à distance de lecture, de la circonférence de l'anneau. Sur sa périphérie, l'anneau présente une transition magnétique singulière qui est inclinée par rapport à l'axe de rotation de la pièce tournante. Lorsque l'organe tournant s'est déplacé axialement, le système détecte une modification de la longueur des pôles, de part et d'autre de la singularité. Il est donc possible d'en déduire un déplacement axial de la pièce tournante. Toutefois, la mesure du déplacement axial n'est effectuée qu'une seule fois par tour, et la mesure de vitesse est faussée sur ce pôle. Cette solution est donc incompatible avec une mesure de vitesse haute résolution.

La demande de brevet japonais JP 2006201157 décrit un système permettant de mesurer le déplacement axial d'une pièce mobile en rotation. Le système de mesure comprend un codeur annulaire solidarisé à la bague intérieure d'un roulement à billes et un ou deux capteurs fixés à la bague extérieure du roulement et situés, radialement, en regard de la piste de codage annulaire du codeur.

Dans un mode de réalisation, illustré sur la figure 10 de la demande de brevet JP 2006201157, le codeur comprend deux pistes de codages. Les deux pistes présentent des motifs en forme d'hélice d'angle constant, de sens trigonométrique opposé. Un capteur est disposé en regard de chacune des deux pistes et une unité de calcul détermine le déplacement axial en fonction de la différence de phase entre les signaux provenant des capteurs.

Toutefois, ce document ne décrit pas le principe de détermination du déphasage entre les signaux provenant des capteurs. Or, la précision de la détermination de la valeur du déphasage est primordiale pour obtenir une valeur fiable du mouvement axial d'une pièce mobile en rotation.

En outre, il est d'autant plus difficile de déterminer précisément la valeur du déphasage que la vitesse de rotation de la pièce mobile présente des variations importantes.

**OBJET DE L'INVENTION**

L'invention vise à remédier à ces problèmes en proposant un système et un procédé de mesure du mouvement axial d'une pièce mobile en rotation permettant de mesurer le déplacement axial de ladite pièce d'une manière fiable et précise.

À cet effet, et selon un premier aspect, l'invention propose un système de mesure du mouvement axial d'une pièce mobile en rotation selon un axe A, comportant :

un dispositif de codage magnétique, comprenant au moins une piste annulaire fixée à la pièce mobile et sur laquelle sont magnétisées une pluralité de paires de pôles Nord et Sud, équirépartis, présentant une forme d'hélice d'axe A;

- un dispositif de détection de champ magnétique comprenant au moins un premier et un deuxième capteurs magnétiques fixes, disposés à une distance axiale d non nulle l'un de l'autre, radialement en regard et à distance de lecture de la piste périphérique du dispositif de codage et sensibles aux variations du champ magnétique induit par le dispositif de codage ; et

- une unité de traitement du signal ;

- le premier capteur comporte :

- une première pluralité d'éléments sensibles situés dans un même plan perpendiculaire à l'axe A, les éléments sensibles étant divisés en au moins deux premiers sous-ensembles ; et

- un circuit électronique agencé pour délivrer deux signaux analogiques SIN1 et COS1 de même amplitude en quadrature en fonction des signaux issus des premiers sous-ensembles ; et

- l'unité de traitement du signal comporte :

- un calculateur pour déterminer un signal ARCTAN1=arctan (SIN1/COS1) à partir des signaux SIN1 et COS1, et

- un opérateur pour déterminer un déphasage entre le champ magnétique vu par le premier capteur et le champ magnétique vu par le deuxième capteur, en fonction du signal ARCTAN1.

Ainsi, le déphasage entre les signaux provenant du premier et du second capteur est mesuré de façon indépendante des variations de la vitesse de rotation de la pièce mobile. En effet, la valeur du déphasage est déterminée en fonction du signal ARCTAN1 qui est représentatif de la position absolue du capteur sur la paire de pôle considérée. Par conséquent, la mesure de déplacement axial obtenue par le système selon l'invention présente une marge d'erreur réduite.

En outre, le système de mesure utilisant deux capteurs, il est possible d'obtenir deux mesures de vitesses dupliquées. Ainsi, la redondance de la mesure permet de garantir une sécurité accrue dans la mesure de vitesse, ce qui est notamment particulièrement intéressant lorsque la mesure de vitesse est utilisée dans des procédés ABS ou anti-patinage.

Dans unmode de réalisation, le deuxième capteur comporte :

- une deuxième pluralité d'éléments situés dans un même plan perpendiculaire à l'axe A et divisés en au moins deux deuxièmes sous-ensembles et

- un circuit électronique agencé pour délivrer deux signaux analogiques SIN2 et COS2 de même amplitude en quadrature en fonction des signaux issus des deuxièmes sous-ensembles.

Dans un mode de réalisation, l'unité de traitement du signal comporte un opérateur pour déterminer le déphasage angulaire instantané en fonction de la valeur du signal ARCTAN1 lors du passage d'un seuil prédéterminé par le signal SIN2 ou COS2.

Dans un autre mode de réalisation, l'unité de traitement du signal comporte :

- un calculateur pour déterminer un signal REF = arctan (SIN2/COS2) à partir des signaux SIN2 et COS2 ; et
- un opérateur pour déterminer le déphasage angulaire instantané en fonction de la différence entre ARCTAN1 et REF.

Les valeurs des signaux ARCTAN1 et REF étant représentatifs de la position absolue des capteurs sur les paires de pôles considérés, il est possible de connaître un temps réel le déplacement axial de l'arbre.

Dans un autre mode de réalisation, le deuxième capteur comporte un détecteur unique sensible au champ magnétique et délivrant un signal REF, l'unité de traitement du signal comportant un opérateur pour déterminer le déphasage instantané en fonction de la valeur du signal ARCTAN1 lors du passage d'un seuil prédéterminé par le signal REF.

Avantageusement, le système comporte en outre un analyseur pour mémoriser les valeurs extrêmes du déphasage instantané et en déduire le jeu axial entre le dispositif de codage et le dispositif de détection.

Dans un mode de réalisation, le premier capteur et le deuxième capteur sont dans un circuit intégré personnalisé ASIC commun. Par conséquent, l'encombrement d'un tel dispositif de détection est limité et son intégration est donc facilitée. En outre, l'intégration des deux capteurs sur un même circuit intégré permet de diminuer sensiblement les coûts de fabrication du système de mesure.

Dans un mode de réalisation, les pôles de ladite première piste annulaire présentent un angle d'hélice $\alpha$ constant, le dispositif de codage comportant une deuxième piste annulaire d'axe A solidaire de la pièce mobile et sur laquelle sont magnétisées une pluralité de paires de pôles Nord et Sud, équirépartis, inclinés par rapport aux pôles de la première piste périphérique.

Dans un mode de réalisation, les pôles de la deuxième piste périphérique s'étendent selon une direction parallèle à l'axe A.

Dans un autre mode de réalisation, les pôles de la seconde piste périphérique présentent une forme d'hélice d'axe A d'angle d'hélice $\beta$ constant. Avantageusement, l'angle $\beta$ et l'angle $\alpha$ sont égaux et de sens trigonométrique opposé. Ainsi, le déphasage observé est plus important et la sensibilité de la mesure de déplacement axial est doublée.

Selon un deuxième aspect, l'invention concerne un procédé de mesure du mouvement axial d'une pièce mobile en rotation autour d'un axe A par rapport à un référentiel fixe, comportant au moins les étapes suivantes :

- engendrer un champ magnétique fixe par rapport à la pièce mobile à l'aide d'au moins une piste magnétique annulaire, l'une des composantes radiales du champ magnétique étant, à une distance radiale prédéterminée de l'axe A, dans un référentiel lié à la pièce mobile, une fonction F ($\Theta$, X) de la position angulaire $\Theta$ considérée sur la piste et de la position axiale X considérée sur la piste, telle que :

$$F(\Theta, X) = K.\Psi\left(P\left[\Theta + G(X)\right]\right)$$

où P est un entier, G une fonction strictement croissante donnée de X, et $\Psi$ une fonction périodique de période $2\pi$,

- délivrer deux signaux analogiques SIN1 et COS1 de même amplitude en quadrature en fonction des signaux représentatifs des variations du champ magnétique vues par un premier capteur fixe par rapport au référentiel et disposé en regard d'une piste annulaire,

- déterminer un signal ARCTAN=arctan(SIN1/COS1) à partir des signaux SIN1 et COS1 ; et

- délivrer un signal référence REF fonction des variations du champ magnétique engendré par la piste magnétique vues par un deuxième capteur fixe par rapport au référentiel fixe et distant du premier capteur d'une distance axiale d, et

- déterminer un déphasage instantané entre les variations du champ magnétique vu par le premier capteur et les variations du champ magnétique vu par le deuxième capteur en fonction du signal ARCTAN1 et du signal REF ; et

- déterminer le déplacement axial de la piste magnétique par rapport au capteur en fonction du déphasage instantané.

Le procédé de mesure selon l'invention permet ainsi d'obtenir une mesure de déplacement axiale précise, qui n'est pas altérée par des variations de la vitesse de rotation de la pièce mobile.

Selon un mode de réalisation, le procédé comporte les étapes suivantes :

- déterminer le signal REF=arctan (SIN2/COS2),

- déterminer le déphasage instantané comme étant la différence entre le signal REF et le signal ARCTAN1.

Selon un autre mode de réalisation, on détermine le déphasage en fonction de la valeur prise par le signal ARCTAN1 lorsque le signal REF passe par une valeur seuil prédéterminée dans au moins un sens prédéterminé.

Avantageusement, le signal REF est proportionnel au signal SIN2 ou au signal COS2.

Dans un mode de réalisation, la fonction G est une fonction linéaire de constante R, telle que :

$$G(X)=R(X-X0)/X0$$

## BRÈVE DESCRIPTION DES FIGURES

D'autres objets et avantages de l'invention apparaîtront au cours de la description qui suit, faite en référence aux dessins annexés, dans lesquels :

la figure 1 est une représentation schématique d'un système de mesure du déplacement axial selon un premier mode de réalisation ;

la figure 2 est une représentation schématique détaillée d'un des anneaux magnétiques composant le système de mesure de la figure 1 ;

la figure 3 est une représentation schématique d'un système de mesure du déplacement axial selon un second mode de réalisation ;la figure 3' est une courbe illustrant la forme d'une transition magnétique d'un pôle d'un anneau, lorsque les pôles présentent une forme d'hélice dont l'angle d'hélice a est variable suivant une fonction $\alpha$ = f(x)= arc tan 2K x;

la figure 4 est une représentation schématique d'un système de mesure selon un troisième mode de réalisation et des signaux issus de son dispositif de détection ; et

la figure 5 est une représentation schématique d'un système de mesure selon un quatrième mode de réalisation et des signaux issus de son dispositif de détection.

## EXEMPLES DE RÉALISATION

Dans la description qui suit, le déplacement de l'arbre le long de son axe de rotation A est désigné par le terme de « déplacement axial ». x désigne la coordonnée axiale d'un point considéré sur l'axe B, axe de l'anneau « codeur », et y désigne la coordonnée curviligne d'un point de ta piste périphérique de l'anneau, mesurée dans un plan perpendiculaire à l'axe B.

En outre, on entend par « longueur polaire Lp », la longueur d'un pôle magnétique mesuré selon l'axe y.

Par ailleurs, on entend par angle d'hélice, au sens de la présente description, l'angle qui est formé par la tangente à l'hélice du pôle par rapport à l'axe x.

Par sonde à effet Hall, on désigne ici des capteurs comprenant au moins un élément sensible, généralement un semi-conducteur sous forme de plaquette, tel que, lorsqu'il est parcouru par un courant I, en étant par ailleurs soumis à une induction B faisant avec le courant un angle $\theta$, il apparaît dans une direction perpendiculaire au courant I et à l'induction B une tension V valant V= K.I.B. sin $\theta$, K étant appelé « constante de Hall », et étant caractéristique du matériau et de la géométrie de l'élément sensible, K variant avec la température.

Par « magnéto-resistance », on désigne ici une varistance sensible à l'intensité d'un champ magnétique, en d'autres termes une résistance en matériau semi-conducteur dont la valeur ohmique varie lorsque varie l'intensité d'un champ magnétique unidirectionnel appliqué perpendiculairement à la direction du courant qui parcourt la résistance.

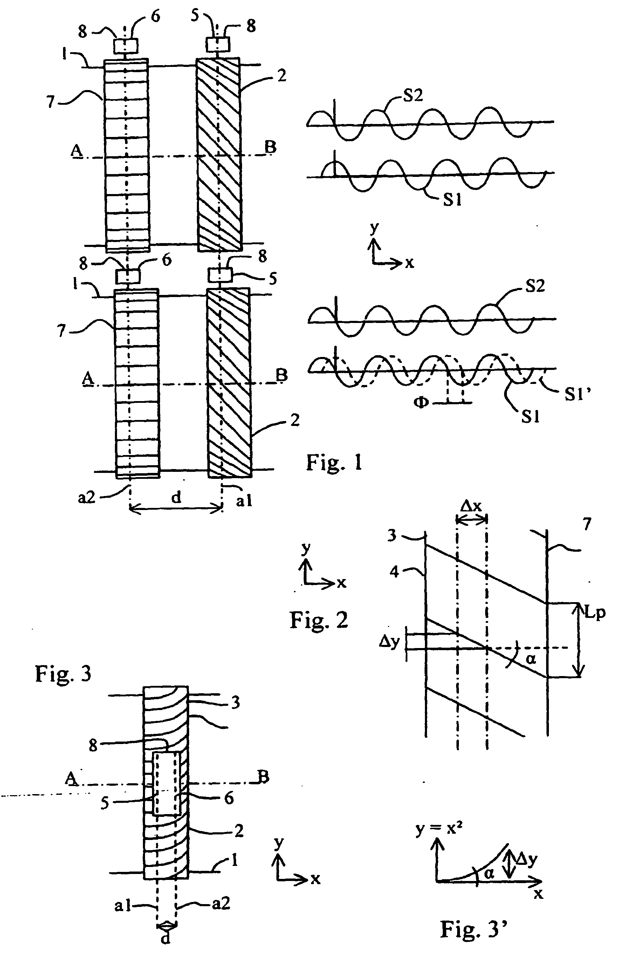

Le système et le procédé selon l'invention visent à mesurer le mouvement d'une pièce mobile en rotation autour d'un axe A et en translation parallèlement à l'axe A, telle que l'arbre 1 qui est représenté sur les figures 1 et 3.

Le système de mesure du déplacement comprend un générateur d'impulsions magnétiques appelé dispositif de codage, un dispositif de détection de champ magnétique et une unité de traitement du signal 8 permettant de traiter les signaux provenant du dispositif de détection afin d'obtenir l'information désirée, et notamment le déplacement axial de l'arbre 1.

Le système de mesure, représenté sur la figure 1, comprend un dispositif de codage composé de deux anneaux 2, 7 magnétiques multipolaires d'axe B, appelés également « codeurs ». Les anneaux 2, 7 sont solidarisés à l'arbre 1, concentriquement à son axe de rotation A.

Les anneaux magnétiques 2, 7 comprennent un nombre de pôles Nord et Sud 3, 4, disposés sur la circonférence de l'anneau 2, 7, et formant une piste périphérique. Les pôles 3, 4 sont équirépartis sur la périphérie des anneaux 2, 7 et présentent des longueurs polaires Lp constantes.

Les anneaux 2, 7 peuvent, par exemple, être des pièces en matériau synthétique chargé de particules de ferrite de Baryum, ou de ferrite de Strontium, ou d'un autre matériau ferromagnétique dur, formée d'une pluralité de domaines contigus, à direction d'aimantation inversée, d'un domaine donné par rapport aux deux domaines contigus.

Les pôles de la piste périphérique du premier anneau 2 présentent une forme d'hélice d'axe B, dont l'angle d'hélice α est constant. Quant au second anneau 7, ou anneau « de référence », les pôles de sa piste périphériques s'étendent selon une direction parallèle à l'axe de rotation A.

Dans un référentiel lié à l'arbre, l'une des composantes du champ magnétique engendré par le premier anneau 2, présentant une forme d'hélice d'axe B d'angle d'hélice a constant, est, à une distance radiale prédéterminée de l'axe A, une fonction F (Θ, X) de la position angulaire Θ considérée sur la piste et de la position axiale X considérée sur la piste, telle que :

$$F(\Theta, X) = K.\Psi\big(P\big[\Theta + G(X)\big]\big)$$

où P est un entier, G une fonction strictement croissante donnée de X, et $\Psi$ une fonction périodique de période $2\pi$.; avec par exemple :

$$G(x) = R\frac{(x - x_0)}{x_0}$$

ou R et $x_0$ sont des constantes.

Le dispositif de détection de champ magnétique est composé de deux capteurs 5, 6, fixes par rapport à l'arbre 1, dont les axes de lecture, désignés $a_1$ et $a_2$, sont distants d'une longueur d constante et orientés radialement à l'axe A de rotation de l'arbre 1. Chaque capteur 5, 6 est disposé en regard et à distance de lecture de la piste périphérique d'un des anneaux multipolaires 2, 7. Les capteurs 5, 6 sont, par exemple, choisis parmi les groupes comprenant les sondes à effet Hall, les magnétorésistances, les magnétorésistances tunnels ou les magnétorésistances géantes et sont placés à distance de lecture de la piste périphérique de telle sorte qu'ils soient aptes à délivrer des signaux représentatifs de l'induction magnétique délivrée par les anneaux 2, 7 à l'entrefer considéré.

Par conséquent, lorsque l'arbre 1 est en rotation, les capteurs 5, 6 délivrent des signaux sinusoïdaux, analogiques, proportionnelles à l'intensité magnétique délivrée par les anneaux multipolaires 2, 7 à l'entrefer considéré. Bien entendu, la période temporelle des signaux sinusoïdaux est proportionnelle à la longueur polaire Lp des pôles et à la vitesse de rotation de l'arbre 1.

Lorsque l'arbre 1 est déplacé axialement, les anneaux magnétiques 2, 7 se déplacent par rapport aux axes de lectures $a_1$ et $a_2$ (voir l'illustration du bas de la figure 1). Les signaux S1 issus du capteur 5 disposé en vis-à-vis du premier anneau 2 subissent alors un déphasage, en raison de la forme hélicoïdale des pôles du premier anneau 2 alors que la phase des signaux S2 issus du second capteur 6 n'est pas modifiée car les pôles du second anneau 3 sont orientés parallèlement à l'axe de rotation A de l'arbre 1.

Par conséquent, l'unité de traitement du signal 8 est en mesure de déterminer le déplacement axial de la pièce, en fonction du déphasage entre les signaux provenant des deux capteurs et de l'angle d'hélice α du premier anneau.

En effet, le déplacement axial est directement déductible du déphasage $\Delta\phi$ subi par le premier signal $S_1$, $S_1$'. Le déplacement axial $\Delta x$ (voir figure 2) est proportionnel à l'angle d'hélice α et à $\Delta y$ qui représente la différence de coordonnées curvilignes de deux points d'une transition magnétique, situés respectivement dans le plan de lecture du premier capteur lorsque l'arbre 1 est dans sa position initiale et dans sa position décalée axialement. La relation est la suivante :

$$\Delta x = \Delta y \: / \tan \alpha$$

Or $\Delta y$ est directement proportionnelle au déphasage $\Delta\varphi$. Le déplacement axial $\Delta x$ peut donc s'exprimer de la façon suivante :

$$\Delta x = (\Delta\phi * Lp) \: / \: (180 * \tan \alpha)$$

Avec Lp : la longueur polaire, $\Delta\phi$ exprimé en degrés et α exprimé en radians.

Dans un autre mode réalisation, représenté sur la figure 3, le dispositif de codage comprend un seul anneau magnétique 2 multipolaire d'axe B, appelé également « codeur ». L'anneau 2 est solidarisé à l'arbre 1, concentriquement à l'axe de rotation A de l'arbre. Les pôles 3, 4 de la piste périphérique de l'anneau 2 présentent une forme d'hélice d'axe B dont l'angle d'hélice $\alpha$ est variable suivant une fonction $\alpha = f(x)$ où x désigne la coordonnée axiale du point considéré sur l'axe B.

En d'autres termes, dans un référentiel lié à l'arbre, l'une des composantes radiales du champ magnétique engendré par l'anneau 2 est, à une distance radiale prédéterminée de l'axe A, une fonction $F(\Theta, X)$ de la position angulaire $\Theta$ considérée sur la piste et de la position axiale X considérée sur la piste, telle que :

$$F(\Theta, X) = K.\Psi\left(P\left[\Theta + G(X)\right]\right)$$

où P est un entier, G une fonction strictement croissante donnée de X, et $\Psi$ une fonction périodique de période $2\pi$.

Comme dans le mode de réalisation précédent, le dispositif de détection de champ magnétique comprend deux capteurs 5, 6 magnétiques fixes qui sont disposés radialement en regard de la piste périphérique de l'anneau 2. Les axes de lecture des capteurs 5, 6, désignés a1 et a2, sont distants d'une longueur d constante et orientés radialement à l'axe A de rotation de l'arbre 1.

Dans ce cas, le dispositif de détection pourra être utilisé de façon intégrée sur un substrat en silicium ou équivalent par exemple AsGa, de sorte à former un circuit intégré personnalisé pour application spécifique, circuits parfois désignés sous le terme ASIC (Application Specific integrated Circuit), pour faire référence aux circuits intégrés conçus partiellement ou complètement en fonction des besoins. Ainsi, dans le mode de réalisation représenté sur la figure 3, le premier 5 et le second capteur 6 sont intégrés sur l'ASIC 9.

Lorsque l'arbre 1 est déplacé axialement, l'anneau magnétique 2 se déplace par rapport aux axes de lectures $a_1$ et $a_2$ et le déphasage $\phi$ entre les signaux issus du premier et du second capteur est modifié. En effet, comme les pôles 3, 4 de l'anneau 2 présentent une forme hélicoïdale dont l'angle d'hélice $\alpha$ est variable, le déphasage entre les signaux issus du premier 5 et du second 6 capteurs est modifié en fonction de l'amplitude du déplacement axial.

Par conséquent, l'unité de traitement du signal 8 est en mesure de déterminer le déplacement axial de la pièce, en fonction du déphasage entre les signaux provenant des deux capteurs et de la fonction a = f(x).

L'avantage majeur de cette solution est de ne nécessiter qu'un seul anneau 2 multipolaire. En outre, les deux capteurs 5, 6 peuvent être regroupés sur un seul circuit intégré 7. Par conséquent, ce système est particulièrement avantageux pour des applications où les coûts et/ou l'encombrement doivent être limités.

Dans le mode de réalisation représenté, les pôles 3, 4 de l'anneau présentent une forme hélicoïdale suivant une fonction $y = K x^2$ (voir figure 3'). En d'autres termes, l'angle d'hélice est variable suivant une fonction a = f(x)= arc tan 2K x où K désigne une constante de proportionnalité non nulle.

Dans ce cas, la fonction G, paramètre de la fonction $F(\Theta, X)$ de génération de champs magnétique, mentionnée ci-dessus est telle qu'il existe des contantes R et $x_0$ vérifiant :

$$G(x) = R\left(\frac{x - x_0}{x_0}\right)^2$$

Le déphasage $\phi$ est une fonction linéaire de $\Delta y$ qui représente ici la différence de coordonnées curvilignes de deux points d'une transition magnétique, situés respectivement dans le plan de lecture du premier et du second capteur.

En outre, lorsque les pôles 3, 4 de l'anneau présentent une forme hélicoïdale suivant une fonction $y = x^2$, alors $\Delta y$ est égale à $(X^2-(X+d)^2) = -2Xd-d^2 \sim 2Xd$, qui est une fonction linéaire du déplacement axial X (voir figure 3'). Par conséquent, la valeur du déphasage $\phi$ est une fonction linéaire du déplacement axial. Ainsi, la mesure du déphasage permet de connaître la position absolue de l'arbre 1.

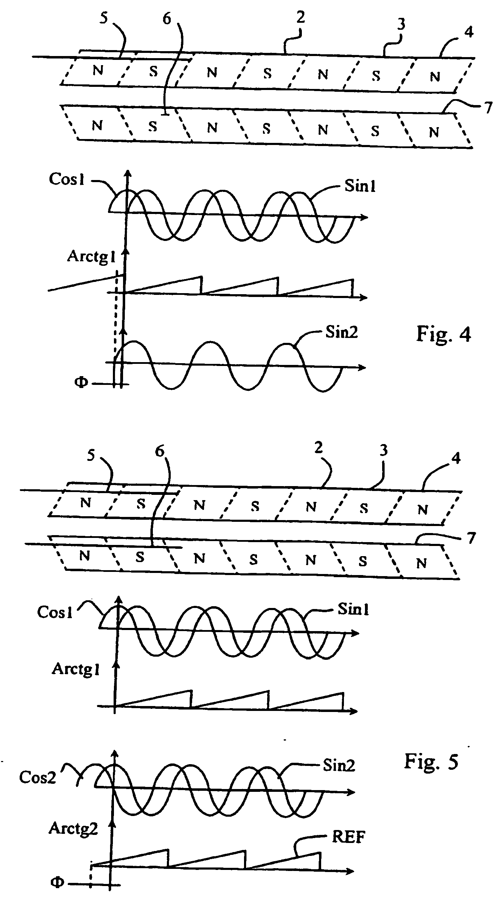

Enfin, dans un autre mode de réalisation de l'invention représenté sur les figures 4 et 5, le dispositif de codage est composé de deux anneaux 2, 7 magnétiques multipolaires d'axe B dont les pôles 3, 4 présentent une forme d'hélice d'axe B, dont les angles d'hélices $\alpha$ et $\beta$ sont constants, mais de sens trigonométrique opposé. Ainsi, lorsque l'arbre 1 subit un déplacement axial (figures 4 et 5), le déphasage observé entre les signaux SIN1 et REF ou SIN2 issus des capteurs 5, 6 est plus important et la sensibilité de la mesure de déplacement axial est doublée.

Nous décrirons par la suite les capteurs, l'unité de traitement du signal et le procédé de mesure selon l'invention en relation avec les modes de réalisation des figures 4 et 5. Toutefois, les capteurs, l'unité de traitement ainsi que le procédé de mesure détaillés par la suite, pourront s'appliquer indifféremment aux systèmes de mesure illustrés sur les figures 1 à 3.

Dans le mode de réalisation de l'invention illustré sur la figure 4, le premier capteur 5 est un capteur comportant une pluralité d'éléments alignés, situés dans un même plan perpendiculaire à l'axe A, sensibles aux champs magnétiques, divisés en au moins deux sous-ensembles et un circuit électronique agencé pour délivrer deux signaux analogiques SIN1 et COS1, de même amplitude, en quadrature sensiblement parfaite, en fonction des signaux issus de ces sous-ensembles.

De tels capteurs sont par exemple décrits dans la demande FR 2 790 827 issue de la demanderesse.

Le second capteur 6 délivre un signal analogique pseudo sinusoïdal REF.

L'unité de traitement 8 du signal comporte un calculateur permettant de déterminer un signal ARCTAN1 (SIN1/COS1), illustré sur la figure 4, en appliquant la fonction arc tangente au rapport SIN1 sur COS1. En outre, afin de déterminer le déphasage entre le signal SIN1 et le deuxième signal REF, l'unité de traitement 8 comporte un opérateur. L'opérateur détermine le déphasage entre les signaux issus des capteurs en fonction de la valeur du signal ARCTAN1(SIN1/COS1) correspondant au passage d'un seuil déterminé par le signal REF issu du deuxième capteur. Par exemple, la valeur du déphasage est déterminée en mesurant la valeur du signal ARCTAN1 (SIN1/COS1) lors du passage à zéro de la fonction REF.

Par la suite, l'unité de traitement du signal 8 calcule le déplacement axial en fonction du déphasage précédemment déterminé.

Cette méthode est très précise et permet d'obtenir une mesure indépendante des variations de vitesse car la valeur prise par le signal ARCTAN1 est représentative de la position absolue du capteur 5, 6 sur la paire de pôle considéré 3, 4.

Dans le mode de réalisation représenté sur la figure 5, le premier 5 et le second 6 capteurs sont des capteurs haute résolution délivrant chacun deux signaux analogiques SIN1, COS1 ; et SIN2, COS2, de même amplitude, en quadrature sensiblement parfaite.

Dans un mode de réalisation, l'opérateur détermine le déphasage angulaire instantané en fonction de la valeur du signal ARCTAN1(SIN1/COS1) lors du passage d'un seuil prédéterminé par le signal SIN2 ou COS2, par exemple le passage à zéro de l'un des signaux SIN2 ou COS2.

Dans un autre mode, le calculateur détermine un signal ARCTAN 1 (SIN1/COS1) à partir des signaux SIN1 et COS1 et un signal REF = ARCTAN2 (SIN2/COS2) à partir des signaux SIN2 et COS2. L'opérateur détermine alors la différence entre les valeurs instantanées prises par les signaux ARCTAN1 (SIN1/COS1) et ARCTAN2 (SIN2/COS2) afin de déterminer le déphasage.

Ainsi, le système et le procédé de mesure, selon cette variante de réalisation, permettent, en outre, de connaître un temps réel le déplacement axial de l'arbre, sous réserve d'une initialisation du système de mesure après son montage sur l'arbre 1.

Dans un mode de réalisation préféré de l'invention, le système est équipé d'une mémoire pour mémoriser les valeurs extrêmes du déphasage et un analyseur pour en déduire le jeu axial entre le dispositif de codage et le dispositif de détection.

L'invention est décrite dans ce qui précède à titre d'exemple. Il est entendu que l'homme du métier est à même de réaliser différentes variantes de réalisation de l'invention sans pour autant sortir du cadre de l'invention.

## Revendications

1. Système de mesure du mouvement axial d'une pièce mobile (1) en rotation selon un axe A, comportant :

   - un dispositif de codage magnétique, comprenant au moins une piste annulaire fixée à la pièce mobile et sur laquelle sont magnétisées une pluralité de paires de pôles Nord et Sud (3, 4), équirépartis, présentant une forme d'hélice d'axe A ;
   - un dispositif de détection de champ magnétique comprenant au moins un premier (5) et un deuxième capteurs (6) magnétiques fixes, disposés à une distance axiale d non nulle l'un de l'autre, radialement en regard et à distance de lecture de la piste périphérique du dispositif de codage et sensibles aux variations du champ magnétique induit par le dispositif de codage ; et
   - une unité de traitement du signal (8);

   **caractérisé en ce que** :

   - le premier capteur (5) comporte :

      - une première pluralité d'éléments sensibles situés dans un même plan perpendiculaire à l'axe A, les éléments sensibles étant divisés en au moins deux premiers sous-ensembles ; et
- un circuit électronique agencé pour délivrer deux signaux analogiques SIN1 et COS1 de même amplitude en quadrature en fonction des signaux issus des premiers sous-ensembles ; et

- l'unité de traitement du signal (8) comporte :

- un calculateur pour déterminer un signal ARCTAN1=arctan (SIN1/COS1) à partir des signaux SIN1 et COS1, et
- un opérateur pour déterminer un déphasage entre le champ magnétique vu par le premier capteur et le champ magnétique vu par le deuxième capteur, en fonction du signal ARCTAN1.

**2.** Système de mesure selon la revendication 1, **caractérisé en ce que** le deuxième capteur (6) comporte :

- une deuxième pluralité d'éléments sensibles situés dans un même plan perpendiculaire à l'axe A et divisés en au moins deux deuxièmes sous-ensembles ; et
- un circuit électronique agencé pour délivrer deux signaux analogiques SIN2 et COS2 de même amplitude en quadrature en fonction des signaux issus des deuxièmes sous-ensembles.

**3.** Système de mesure selon l'une des revendications 1 et 2, **caractérisé en ce que** l'unité de traitement du signal (8) comporte un opérateur pour déterminer le déphasage angulaire instantané en fonction de la valeur du signal ARCTAN1 lors du passage d'un seuil prédéterminé par le signal SIN2 ou COS2.

**4.** Système de mesure selon la revendication 2, **caractérisé en ce que** l'unité de traitement du signal (8) comporte :

- un calculateur pour déterminer un signal REF = arctan (SIN2/COS2) à partir des signaux SIN2 et COS2 ; et
- un opérateur pour déterminer le déphasage angulaire instantané en fonction de la différence entre ARCTAN1 et REF.

**5.** Système de mesure selon la revendication 1, **caractérisé en ce que** le deuxième capteur (6) comporte un détecteur unique sensible au champ magnétique et délivrant un signal REF, l'unité de traitement du signal (8) comportant un opérateur pour déterminer le déphasage instantané en fonction de la valeur du signal ARCTAN1 lors du passage d'un seuil prédéterminé par le signal REF.

**6.** Système selon l'une quelconque des revendications précédentes, **caractérisé en ce que** le système comporte en outre un analyseur pour mémoriser les valeurs extrêmes du déphasage instantané et en déduire le jeu axial entre le dispositif de codage et le dispositif de détection.

**7.** Système de mesure selon l'une quelconque des revendications précédentes, **caractérisé en ce que** le premier capteur (5) et le deuxième capteurs (6) sont dans un circuit intégré personnalisé ASIC commun.

**8.** Système de mesure selon l'une quelconque des revendications précédentes, **caractérisé en ce que** les pôles (3, 4) de ladite première piste annulaire présente un angle d'hélice α constant, le dispositif de codage comportant une deuxième piste annulaire d'axe A solidaire de la pièce mobile et sur laquelle sont magnétisées une pluralité de paires de pôles Nord et Sud (3, 4), équirépartis, inclinés par rapport aux pôles (3, 4) de la première piste périphérique.

**9.** Système de mesure selon la revendication 8, **caractérisé en ce que** les pôles de la deuxième piste périphériques s'étendent selon une direction parallèle à l'axe A.

**10.** Système de mesure selon la revendication 8, **caractérisé en ce que** les pôles (3, 4) de la seconde piste périphérique présentent une forme d'hélice d'axe A d'angle d'hélice β constant.

**11.** Système de mesure selon la revendication 10, **caractérisé en ce que** l'angle β et l'angle α sont égaux et de sens trigonométrique opposé.

**12.** Procédé de mesure du mouvement axial d'une pièce mobile en rotation autour d'un axe A par rapport à un référentiel fixe, **caractérisé en ce qu'**il comporte au moins les étapes suivantes :

- engendrer un champ magnétique fixe par rapport à la pièce mobile à l'aide d'au moins une piste magnétique annulaire, l'une des composantes radiales du champ magnétique étant, à une distance radiale prédéterminée de l'axe A, dans un référentiel lié à la pièce mobile (1), une fonction F (Θ, X) de la position angulaire Θ considérée sur la piste et de la position axiale X considérée sur la piste, telle que :

$$F(\Theta, X) = K.\Psi\big(P\big[\Theta + G(X)\big]\big)$$

où P est un entier, G une fonction strictement croissante donnée de X, et Ψ une fonction périodique de période $2\pi$,
- délivrer deux signaux analogiques SIN1 et COS1 de même amplitude en quadrature en fonction des signaux représentatifs des variation du champ magnétique vues par un premier capteur fixes par rapport au référentiel et disposé en regard d'une piste annulaire,
- déterminer un signal ARCTAN1=arctan(SIN1/COS1) à partir des signaux SIN1 et COS1 ; et
- délivrer un signal référence REF fonction des variations du champ magnétique engendré par la piste magnétique vues par un deuxième capteur fixe par rapport au référentiel fixe et distant du premier capteur d'une distance axial d, et
- déterminer un déphasage instantané entre les variations du champ magnétique vu par le premier capteur et les variations du champ magnétique vu par le deuxième capteur en fonction du signal ARCTAN1 et du signal REF ; et
- déterminer le déplacement axial de la piste magnétique par rapport au capteur en fonction du déphasage instantané.

13. Procédé de mesure du mouvement selon la revendication 12, **caractérisé en ce qu'**il comporte les étapes suivantes :

- délivrer deux signaux analogiques SIN2 et COS2 de même amplitude en quadrature en fonction des signaux représentatifs des variation du champ magnétique vu par le deuxième capteur,
- déterminer le signal REF en fonction de SIN2 et/ou de COS2.

14. Procédé de mesure du mouvement selon la revendication 13, **caractérisé en ce qu'**il comporte les étapes suivantes :

- déterminer le signal REF=artctan (SIN2/COS2),
- déterminer le déphasage instantané comme étant la différence entre le signal REF et le signal ARCTAN1.

15. Procédé de mesure du mouvement selon la revendication 13, **caractérisé en ce qu'**il comporte l'étape suivante : déterminer le déphasage en fonction de la valeur prise par le signal ARCTAN1 lorsque le signal REF passe par une valeur seuil prédéterminée dans au moins un sens prédéterminé.

16. Procédé de mesure du mouvement selon la revendication 15, **caractérisé en ce que** le signal REF est proportionnel au signal SIN2 ou au signal COS2.

17. Procédé selon l'une quelconque des revendications 12 à 16, **caractérisé en ce que** la fonction G est une fonction linéaire de constante R, telle que :

$$G(X)=R(X-X0)/X0$$

**Patentansprüche**

1. System zum Messen der Axialbewegung eines drehbeweglichen Teils (1) entlang einer Achse A, umfassend:

- eine magnetische Codiervorrichtung, umfassend mindestens eine ringförmige Spur, die an dem beweglichen Teil befestigt ist, und auf der eine Vielzahl von Paaren von Nord- und Südpolen (3, 4), die gleich verteilt sind, magnetisiert sind, die eine Spiralform mit einer Achse A aufweist;
- eine Vorrichtung zur Erfassung eines Magnetfeldes, umfassend mindestens einen ersten (5) und einen zweiten festen Magnetsensor (6), die in einem Axialabstand d ungleich Null zueinander, radial gegenüberliegend und in einem Leseabstand zur Umfangsspur der Codiervorrichtung angeordnet und für die Variationen des Magnetfeldes, die durch die Codiervorrichtung induziert werden, sensibel sind, und
- eine Einheit zur Bearbeitung des Signals (8); **dadurch gekennzeichnet, dass**:
- der erste Sensor (5) umfasst:

  - eine erste Vielzahl von sensiblen Elementen, die in einer selben Ebene senkrecht zu der Achse A angeordnet sind, wobei die sensiblen Elemente in mindestens zwei erste Untereinheiten unterteilt sind; und
  - eine elektronische Schaltung, die derart angeordnet ist, dass sie zwei analoge Signale SIN1 und COS1 derselben Quadraturamplitude in Abhängigkeit von den Signalen, die von den ersten Untereinheiten ausgehen, liefern, und

  - die Signalbearbeitungseinheit (8) umfasst:

    - einen Rechner, um ein Signal ARCTAN1=arctan(SIN1/COS1) aus den Signalen SIN1 und COS1 zu bestimmen, und
    - einen Operator, um eine Phasenverschiebung zwischen dem vom ersten Sensor gesehenen Magnetfeld und dem vom zweiten Sensor gesehenen Magnetfeld in Abhängigkeit vom Signal ARCTAN1 zu bestimmen.

2. Messsystem nach Anspruch 1 oder 2, **dadurch gekennzeichnet, dass** der zweite Sensor (6) umfasst:

   - eine zweite Vielzahl von sensiblen Elementen, die sich in einer selben Ebene senkrecht zu der Achse A befinden und in mindestens zwei Untereinheiten unterteilt sind, und
   - eine elektronische Schaltung, die derart vorgesehen ist, dass sie zwei analoge Signale SIN2 und COS2 derselben Quadraturamplitude in Abhängigkeit von den Signalen, die von den zweiten Untereinheiten kommen, liefern.

3. Messsystem nach Anspruch 1 und 2, **dadurch gekennzeichnet, dass** die Signalbearbeitungseinheit (8) einen Operator umfasst, um die momentane Winkelphasenverschiebung in Abhängigkeit vom Wert des Signals ARCTAN1 beim Überschreiten einer vorbestimmten Schwelle durch das Signal SIN2 oder COS2 zu bestimmen.

4. Messsystem nach Anspruch 2, **dadurch gekennzeichnet, dass** die Signalbearbeitungseinheit (8) umfasst:

   - einen Rechner, um ein Signal REF=arctan(SIN2/COS2) aus den Signalen SIN2 und COS2 zu bestimmen; und
   - einen Operator, um die momentane Winkelphasenverschiebung in Abhängigkeit von der Differenz zwischen ARCTAN1 und REF zu bestimmen.

5. Messsystem nach Anspruch 1, **dadurch gekennzeichnet, dass** der zweite Sensor (6) einen einzigen Detektor umfasst, der für das Magnetfeld sensibel ist und ein Signal REF liefert, wobei die Signalbearbeitungseinheit (8) einen Operator umfasst, um die momentane Phasenverschiebung in Abhängigkeit vom Wert des Signals ARCTAN1 beim Überschreiten einer vorbestimmten Schwelle durch das Signal REF zu bestimmen.

6. System nach einem der vorhergehenden Ansprüche, **dadurch gekennzeichnet, dass** das System ferner einen Analysator umfasst, um die Extremwerte der momentanen Phasenverschiebung zu speichern und davon das Axialspiel zwischen der Codiervorrichtung und der Erfassungsvorrichtung abzuleiten.

7. Messsystem nach einem der vorhergehenden Ansprüche, **dadurch gekennzeichnet, dass** der erste Sensor (5) und der zweite Sensor (6) in einer gemeinsamen personalisierten integrierten Schaltung ASIC sind.

8. Messsystem nach einem der vorhergehenden Ansprüche, **dadurch gekennzeichnet, dass** die Pole (3, 4) der ersten ringförmigen Spur einen konstanten Spiralwinkel α aufweisen, wobei die Codiervorrichtung eine zweite ringförmige Spur mit einer Achse A umfasst, die mit dem beweglichen Teil verbunden ist und auf der eine Vielzahl von Paaren von Nord-Süd-Polen (3, 4), die gleich verteilt und in Bezug zu den Polen (3, 4) der ersten Umfangsspur geneigt sind, magnetisiert sind.

9. Messsystem nach Anspruch 8, **dadurch gekennzeichnet, dass** sich die Pole der zweiten Umfangsspur in eine Richtung parallel zur Achse A erstrecken.

10. Messsystem nach Anspruch 8, **dadurch gekennzeichnet, dass** die Pole (3, 4) der zweiten Umfangsspur eine Spiralform mit einer Achse A mit einem konstanten Spiralwinkel β aufweisen.

11. Messsystem nach Anspruch 10, **dadurch gekennzeichnet, dass** der Winkel β und der Winkel α gleich und von entgegengesetzter trigonometrischer Richtung sind.

12. Verfahren zum Messen der Axialbewegung eines drehbeweglichen Teils um eine Achse A in Bezug zu einem festen Bezugssystem, **dadurch gekennzeichnet, dass** es mindestens die folgenden Schritte umfasst:

- Erzeugen eines festen Magnetfeldes in Bezug zum beweglichen Teil mit Hilfe mindestens einer ringförmigen Magnetspur, wobei eine der radialen Komponenten des Magnetfeldes in einem vorbestimmten Radialabstand zur Achse A in einem Bezugssystem, das mit dem beweglichen Teil (1) verbunden ist, eine Funktion F(θ,X) der betreffenden Winkelposition θ auf der Spur und der betreffenden Axialposition X auf der Spur ist, wie:

$$F(\theta,X)=K.\psi(P[\theta+G(X)])$$

wobei P eine ganze Zahl ist, G eine streng steigende gegebene Funktion von X ist, ψ eine periodische Funktion der Periode 2π ist,
- Liefern von zwei analogen Signalen SIN1 und COS1 derselben Quadraturamplitude in Abhängigkeit von den Signalen, die für die Variationen des Magnetfeldes repräsentativ sind, gesehen von einem ersten in Bezug zu dem Bezugssystem festen Sensor, der gegenüber einer ringförmigen Spur angeordnet ist,
- Bestimmen eines Signals ARCTAN1=arctan(SIN1/COS1) aus den Signalen SIN1 und COS1; und
- Liefern eines Referenzsignals REF, das von den Variationen des von der Magnetspur erzeugten Magnetfeldes abhängt, gesehen von einem zweiten in Bezug zu dem festen Bezugssystem festen Sensor, der vom ersten Sensor um einen Axialabstand d entfernt ist,
- Bestimmen einer momentanen Phasenverschiebung zwischen den Variationen des vom ersten Sensor gesehenen Magnetfeldes und den Variationen des vom zweiten Sensor gesehenen Magnetfeldes, in Abhängigkeit von dem Signal ARCTAN1 und dem Signal REF; und
- Bestimmen der Axialverschiebung der Magnetspur in Bezug zum Sensor in Abhängigkeit von der momentanen Phasenverschiebung.

13. Verfahren zum Messen der Bewegung nach Anspruch 12, **dadurch gekennzeichnet, dass** es die folgenden Schritte umfasst:

- Liefern von zwei analogen Signalen SIN2 und COS2 derselben Quadraturamplitude in Abhängigkeit von den Signalen, die für die Variationen des Magnetfeldes, das vom zweiten Sensor gesehen wird, repräsentativ sind,
- Bestimmen des Signals REF in Abhängigkeit von SIN2 und/oder COS2.

14. Verfahren zum Messen der Bewegung nach Anspruch 13, **dadurch gekennzeichnet, dass** es die folgenden Schritte umfasst:

- Bestimmen des Signals REF=arctan(SIN2/COS2),
- Bestimmen der momentanen Phasenverschiebung als die Differenz zwischen dem Signal REF und dem Signal ARCTAN1.

15. Verfahren zum Messen der Bewegung nach Anspruch 13, **dadurch gekennzeichnet, dass** es den folgenden Schritt umfasst: Bestimmen der Phasenverschiebung in Abhängigkeit von dem Wert, der von dem Signal ARCTAN1 angenommen wird, wenn das Signal REF einen vorbestimmten Schwellenwert in mindestens eine vorbestimmte Richtung überschreitet.

16. Verfahren zum Messen der Bewegung nach Anspruch 15, **dadurch gekennzeichnet, dass** das Signal REF proportional zum Signal SIN2 oder zum Signal COS2 ist.

17. Verfahren nach einem der Ansprüche 12 bis 16, **dadurch gekennzeichnet, dass** die Funktion G eine lineare Funktion der Konstante R ist, wie:

$$G(X)=R(X-X0)/X0)$$

## Claims

1. System for measuring the axial movement of a mobile part (1) rotating on an axis A, comprising:

   - a magnetic coding device, comprising at least one annular track fixed to the mobile part and on which are magnetized a plurality of north and south pole pairs (3, 4), equidistant, exhibiting a helical form of axis A;
   - a magnetic field detection device comprising at least one first (5) and one second (6) fixed magnetic sensor, arranged at a non-zero axial distance d from one another, radially opposite and at a reading distance from the peripheral track of the coding device and sensitive to the variations of the magnetic field induced by the coding device; and
   - a signal processing unit (8);

   **characterized in that**:

   - the first sensor (5) comprises:

     - a first plurality of sensitive elements situated in a same plane at right angles to the axis A, the sensitive elements being divided into at least two first subsets; and
     - an electronic circuit arranged to deliver two analogue signals SIN1 and COS1 of the same amplitude in quadrature as a function of the signals from the first subsets; and

   - the signal processing unit (8) comprises:

     - a computer for determining a signal ARCTAN1 = arctan (SIN1/COS1) from the signals SIN1 and COS1, and
     - an operator for determining a phase shift between the magnetic field seen by the first sensor and the magnetic field seen the second sensor, as a function of the signal ARCTAN1.

2. Measurement system according to Claim 1, **characterized in that** the second sensor (6) comprises:

   - a second plurality of sensitive elements situated in a same plane at right angles to the axis A and divided into at least two second subsets; and
   - an electronic circuit arranged to deliver two analogue signals SIN2 and COS2 of the same amplitude in quadrature as a function of the signals from the second subsets.

3. Measurement system according to one of Claims 1 and 2, **characterized in that** the signal processing unit (8) comprises an operator for determining the instantaneous angular phase shift as a function of the value of the signal ARCTAN1 upon the crossing of a predetermined threshold by the signal SIN2 or COS2.

4. Measurement system according to Claim 2, **characterized in that** the signal processing unit (8) comprises:

   - a computer for determining a signal REF = arctan (SIN2/COS2) from the signals SIN2 and COS2; and
   - an operator for determining the instantaneous angular phase shift as a function of the difference between ARCTAN1 and REF.

5. Measurement system according to Claim 1, **characterized in that** the second sensor (6) comprises a single detector sensitive to the magnetic field and delivering a signal REF, the signal processing unit (8) comprising an operator for determining the instantaneous phase shift as a function of the value of the signal ARCTAN1 upon the crossing of a predetermined threshold by the signal REF.

6. System according to any one of the preceding claims, **characterized in that** the system further comprises an analyser for storing the extreme values of the instantaneous phase shift and deducing therefrom the axial play between the coding device and the detection device.

**7.** Measurement system according to any one of the preceding claims, **characterized in that** the first sensor (5) and the second sensor (6) are in a common customized integrated circuit ASIC.

**8.** Measurement system according to any one of the preceding claims, **characterized in that** the poles (3, 4) of said first annular track exhibit a constant helix angle $\alpha$, the coding device comprising a second annular track of axis A secured to the mobile part and on which are magnetized a plurality of north and south pole pairs (3, 4), equidistant, inclined relative to the poles (3, 4) of the first peripheral track.

**9.** Measurement system according to Claim 8, **characterized in that** the poles of the second peripheral track extend in a direction parallel to the axis A.

**10.** Measurement system according to Claim 8, **characterized in that** the poles (3, 4) of the second peripheral track exhibit a helical form of axis A of constant helix angle $\beta$.

**11.** Measurement system according to Claim 10, **characterized in that** the angle $\beta$ and the angle $\alpha$ are equal and of opposite trigonometrical direction.

**12.** Method for measuring axial movement of a mobile part rotating about an axis A relative to a fixed reference frame, **characterized in that** it comprises at least the following steps:

- generating a magnetic field that is fixed relative to the mobile part using at least one annular magnetic track, one of the radial components of the magnetic field being, at a predetermined radial distance from the axis A, in a reference frame linked to the mobile part (1), a function $F(\theta, X)$ of the angular position $\theta$ considered on the track and of the axial position X considered on the track, such that:

$$F(\theta, X) = K \cdot \Psi(P[\theta + G(X)])$$

in which P is an integer, G is a given strictly increasing function of X, and $\Psi$ is a periodic function of period 2n,
- delivering two analogue signals SIN1 and COS1 of the same amplitude in quadrature as a function of the signals representative of the variations of the magnetic field seen by a first sensor that is fixed relative to the reference frame and arranged facing an annular track,
- determining a signal ARCTAN1 = arctan (SIN1/COS1) from the signals SIN1 and COS1; and
- delivering a reference signal REF that is a function of the variations of the magnetic field generated by the magnetic track seen by a second sensor that is fixed relative to the fixed reference frame and remote from the first sensor by an axial distance d, and
- determining an instantaneous phase shift between the variations of the magnetic field seen by the first sensor and the variations of the magnetic field seen by the second sensor as a function of the signal ARCTAN1 and of the signal REF; and
- determining the axial displacement of the magnetic track relative to the sensor as a function of the instantaneous phase shift.

**13.** Method for measuring movement according to Claim 12, **characterized in that** it comprises the following steps:

- delivering two analogue signals SIN2 and COS2 of the same amplitude in quadrature as a function of the signals representative of the variations of the magnetic field seen by the second sensor,
- determining the signal REF as a function of SIN2 and/or of COS2.

**14.** Method for measuring movement according to Claim 13, **characterized in that** it comprises the following steps:

- determining the signal REF = arctan (SIN2/COS2),
- determining the instantaneous phase shift as being the difference between the signal REF and the signal ARCTAN1.

**15.** Method for measuring movement according to Claim 13, **characterized in that** it comprises the following step:
determining the phase shift as a function of the value taken by the signal ARCTAN1 when the signal REF crosses a predetermined threshold value in at least one predetermined direction.

**16.** Method for measuring movement according to Claim 15, **characterized in that** the signal REF is proportional to the signal SIN2 or to the signal COS2.

**17.** Method according to any one of Claims 12 to 16, **characterized in that** the function G is a linear function of constant R, such that:

$$G(X) = R(X-X0)/X0$$

Fig. 1

Fig. 2

Fig. 3

Fig. 3'

Fig. 4

Fig. 5

**EP 2 163 851 B1**

## RÉFÉRENCES CITÉES DANS LA DESCRIPTION

**Documents brevets cités dans la description**

- EP 1876422 A
- JP 2006201157 B

- FR 2790827